# FASCICULE DE BREVET EUROPEEN

(11) **EP 2 780 198 B1**
(45) Date de publication et mention de la délivrance du brevet: **06.07.2016**
(21) Numéro de dépôt: 12795518.5
(22) Date de dépôt: 12.11.2012
(51) Int. Cl.: B60R 13/02, B62D 1/16, B62D 1/187, B62D 1/189, B62D 1/19

(54) **PIÈCE DE GARNISSAGE D'UNE COLONNE DE DIRECTION DE VÉHICULE AUTOMOBILE**
VERKLEIDUNGSTEIL FÜR KRAFTFAHRZEUGLENKSÄULE
MOTOR VEHICLE STEERING COLUMN TRIM ELEMENT

(30) Priorité: 14.11.2011 FR 1160340
(43) Date de publication de la demande: 24.09.2014
(73) Titulaire: Peugeot Citroën Automobiles SA, 78140 Vélizy Villacoublay (FR)
(72) Inventeur: GOFFINON, Philippe, F-94360 Bry Sur Marne (FR)
(86) Numéro de dépôt international: PCT/FR2012/052595
(87) Numéro de publication internationale: WO 2013/072607

(56) Documents cités:
- EP-A1- 1 207 094
- WO-A1-2007/034440
- DE-A1- 19 644 170
- DE-A1-102005 010 862
- DE-A1-102008 038 800
- DE-C1- 3 728 457
- FR-A1- 2 880 858
- US-A- 5 813 288
- US-A1- 2004 129 098
- US-A1- 2009 033 083

## Description

La présente invention concerne une pièce de garnissage d'une colonne de direction de véhicule automobile, en particulier pour une colonne de direction à hauteur réglable.

Dans l'état de la technique, le document US2004129098, considéré comme l'état de l'art antérieur le plus proche selon le préambule de la revendication 1, décrit une pièce de garnissage destinée à recouvrir la partie mécanique d'une colonne de direction réglable d'un véhicule automobile constituée en deux parties distinctes comportant une partie fabriquée en matériau rigide et l'autre partie en matériau souple, apte à se déformer élastiquement sous un appui déterminé. Nous connaissons également le document FR2929232 qui décrit un dispositif de protection d'une colonne de direction de véhicule automobile, comprenant un voile souple et un mécanisme d'accroche qui comprend un enrouleur. Le voile souple est conçu pour être fixée à une extrémité à la planche de bord via l'enrouleur et à l'autre extrémité sur une zone de la colonne de direction. L'enrouleur permet de générer un couple de rappel élastique de manière à exercer une tension sur le voile souple entre la planche de bord et la colonne de direction. Ce dispositif de protection d'une colonne de direction nécessite une liaison constante du voile entre la colonne de direction et la planche de bord et de fait engendre des contraintes supplémentaires lors de l'assemblage de la colonne de direction. Une autre solution consiste à masquer les parties mécaniques de la colonne de direction à l'aide d'un dispositif à soufflet. Le soufflet est disposé entre la colonne de direction et la planche de bord, il se déplie et se replie lors du débattement de la colonne de direction pour régler le volant selon le souhait du conducteur. La bonne tenue du soufflet est souvent délicate et les plis générés dans certaines positions de la colonne sont souvent disgracieux et peuvent s'avérer gênant lors du fonctionnement du système de réglage du volant. De plus, ces dispositifs n'améliorent pas, à priori la qualité perçue car l'agencement de ces dispositifs peut sembler fragile et leurs tenues dans le temps imprévisible.

Le but de la présente invention est de proposer une pièce de garnissage élaborée, constituant visuellement une seule pièce, dont une portion permet de masquer la partie mécanique de la colonne de direction tout en assurant la fonction de déformation lors du réglage et l'autre portion de recouvrir le haut de la colonne de direction, procurant une bonne qualité perçue.

A cet effet, la présente invention a pour objet une pièce de garnissage destinée à recouvrir la partie mécanique d'une colonne de direction réglable d'un véhicule automobile constituée en deux parties distinctes, une partie étant fabriquée en matériau rigide et l'autre partie en matériau souple apte à se déformer élastiquement sous un appui déterminé, la partie rigide forme un carter sensiblement en forme de U inversé, se prolongeant par deux languettes latérales.
, le carter rigide sur son extrémité recevant le carter en matériau souple à un biseau se dirigeant vers l'intérieur du carter et un talon situé à proximité du débouché du biseau, la partie en matériau souple se raccordant sur le carter rigide à son extrémité en biseau vers l'extérieur se prolongeant par une portion inclinée de pente identique et un rebord en saillie.

Selon une autre caractéristique avantageuse, la partie en matériau souple est un carter souple ayant une forme générale en U inversé, s'évasant en hauteur en direction de son extrémité libre.

Selon une autre variante, les biseaux du carter rigide et du carter souple viennent coopérer ensembles, le rebord en saillie du carter souple venant en appui sur le talon du carter rigide.

Selon une caractéristique avantageuse, le carter souple à son épaisseur sensiblement égal à la moitié de l'épaisseur du carter rigide.

Selon une autre caractéristique avantageuse le carter rigide et le carter souple ont leurs surfaces extérieures affleurantes.

Avantageusement, le carter souple se déforme, sous l'effet d'un appui sur sa zone supérieure.

L'invention concerne également un véhicule automobile comportant une pièce de garnissage, comportant une partie en matériau rigide et une autre partie en matériau souple, ayant les caractéristiques susmentionnées.

D'autres caractéristiques et avantages de l'invention apparaîtront clairement à la lecture de la description ci-après, donnée à titre indicatif en référence aux dessins annexés dans lesquels:
- La figure 1 est une vue en perspective d'une pièce de garnissage d'une colonne de direction réalisée en deux parties de matériaux différents.
- La figure 2 est une section en coupe longitudinale de profil d'une pièce de garnissage d'une colonne de direction montrant l'accostage des deux carters de la pièce de garnissage.
- La figure 3 est une vue montrant en coupe transversale d'une planche de bord et en section les amplitudes de déplacement de la pièce de garnissage.

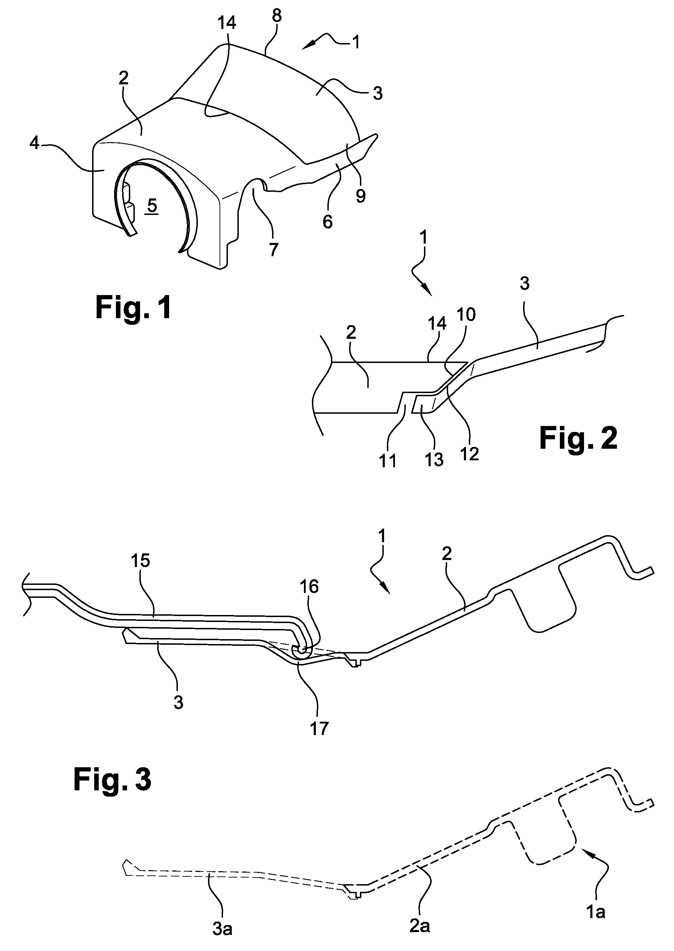

La figure 1 est une vue en perspective d'une pièce de garnissage 1 d'une colonne de direction réalisée en deux parties 2, 3 de matériaux différents. La pièce de garnissage 1 a pour objet de masquer les parties mécaniques de la colonne de direction, non représentées sur la figure. La partie 2 a la forme générale d'un carter rigide en forme de U inversé, dont une extrémité possède un fond 4 dans lequel est ménagée une ouverture cylindrique 5 et l'autre extrémité se prolonge par deux languettes latérales 6. Le carter 2 rigide est destiné à venir coiffer le dessus de la colonne de direction et elle est engagée dans l'ouverture cylindrique 5 qui est situé à proximité du volant. Des demi-ouvertures latérales 7 permettent d'assurer les passages des bras du comodo. On comprend alors qu'un autre carter sera placé en dessous de la colonne de direction et assemblé avec le carter 2 rigide pour assurer la qualité de finition requise. La partie 3 en matériau souple est un carter souple ayant une forme générale en U inversé, s'évasant en hauteur en direction de son extrémité libre 8. Les bords latéraux 9 du carter 3 souple reposent sur les languettes 6 du carter rigide 2.

La figure 2 est une section en coupe longitudinale de profil d'une pièce de garnissage 1 d'une colonne de direction montrant l'accostage des deux carters 2 rigide et 3 souple de la pièce de garnissage. Le carter 2 rigide sur son extrémité recevant le carter 3 en matériau souple, à un biseau 10 incliné vers l'intérieur du carter 2 rigide et un talon 11 situé à proximité du débouché du biseau 10.
Le carter 3 en matériau souple se raccordant sur le carter 2 rigide à son extrémité en biseau 12 vers l'extérieur se prolongeant par une portion inclinée de pente identique et un rebord 13 en saillie. Les biseaux 10 et 12 des carters 2 rigide et 3 souple sont destinés à coopérer ensembles et le talon 11 du carter 2 rigide constitue une butée au rebord 13 du carter 3 souple. L'accostage du carter 3 souple est réalisé sur trois cotés, soit à l'extrémité supérieure 14 du carter 2 rigide et sur les deux languettes (non représentée sur la figure) disposées en vis-à-vis. De fait, l'assemblage du carter 2 rigide sur le carter 3 souple est robuste et toutes les surfaces extérieures sont affleurantes. La pièce de garnissage 1 peut être obtenue directement par un procédé de bi-injection afin d'obtenir directement la liaison entre le carter 2 rigide et le carter 3 souple. La pièce de garnissage 1 pourrait être obtenue également par collage du carter 3 souple sur le carter 2 rigide, tout en produisant le même effet technique et de qualité perçue.

La figure 3 est une vue montrant en coupe transversale d'une planche de bord 15 et en section les amplitudes de déplacement de la pièce de garnissage 1 en traits pleins et 1a en traits interrompus. La planche de bord 15 représentée, comporte une partie plane se prolongeant en direction du volant, par une partie de bordure légèrement inclinée puis un bourrelet cylindrique 16 de finition de la bordure. Sur la figure, on voit que la pièce de garnissage 1a comprenant le carter 2a rigide et le carter 3a souple en position basse de réglage du volant sont éloignés du rebord 17 de la planche de bord. A l'inverse, la pièce de garnissage 1 comprenant le carter 2 rigide et le carter 3 souple en position la plus haute de réglage du volant, vient en contact avec le bourrelet 16 de la planche de bord 15, en particulier c'est la zone supérieure 17 du carter 3 souple qui est déformée élastiquement. Lorsque le réglage du volant est à nouveau effectué par exemple sur une position intermédiaire, le carter 3 souple reprend sa position normale, assurant la qualité perçue requise et recherchée.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. Pièce (1) de garnissage destinée à recouvrir la partie mécanique d'une colonne de direction réglable d'un véhicule automobile constituée en deux parties (2) (3) distinctes **caractérisée en ce qu'**une partie (2) est fabriquée en matériau rigide et l'autre partie (3) en matériau souple, apte à se déformer élastiquement sous un appui déterminé, **caractérisée en ce que** la partie (2) rigide forme un carter sensiblement en forme de U inversé, se prolongeant par deux languettes (6) latérales, **en ce que** le carter (2) rigide sur son extrémité recevant le carter (3) en matériau souple a un biseau (10) se dirigeant vers l'intérieur du carter (2) et un talon (11) situé à proximité du débouché du biseau (10), le carter (3) en matériau souple se raccordant sur le carter (2) rigide, a son extrémité en biseau (12) vers l'extérieur se prolongeant par une portion inclinée de pente identique et un rebord (13) en saillie.

2. Pièce (1) de garnissage selon la revendication 1, **caractérisé en ce que** la partie (3) en matériau souple est un carter ayant une forme générale en U inversé, s'évasant en hauteur en direction de son extrémité (8) libre.

3. Pièce (1) de garnissage selon la revendication 1, **caractérisé en ce que** le biseau (10) du carter (2) rigide et le biseau (12) du carter (3) souple viennent coopérer ensembles, le rebord (13) en saillie du carter (3) souple venant en appui sur le talon (11) du carter (2) rigide.

4. Pièce (1) de garnissage selon l'une des revendications précédentes, **caractérisé en ce que** le carter (3) souple a son épaisseur sensiblement égal à la moitié de l'épaisseur du carter (2) rigide.

5. Pièce (1) de garnissage selon l'une des revendications précédentes, **caractérisé en ce que** le carter (2) rigide et le carter (3) souple ont leurs surfaces extérieures affleurantes.

6. Pièce (1) de garnissage selon l'une des revendications précédentes, **caractérisé en ce que** le carter (3) souple se déforme élastiquement, sous l'effet d'un appui sur sa zone supérieure (17).

7. Véhicule automobile comportant une pièce (1) de garnissage, comportant une partie (2) en matériau rigide et une autre partie (3) en matériau souple selon l'une quelconque des revendications 1 à 6.

## Patentansprüche

1. Verkleidungsteil (1), das dazu bestimmt ist, den mechanischen Teil einer einstellbaren Lenksäule eines Kraftfahrzeugs abzudecken, die aus zwei getrennten Teilen (2) (3) besteht, **dadurch gekennzeichnet, dass** ein Teil (2) aus einem starren Material hergestellt ist und der andere Teil (3) aus biegsamem Material hergestellt ist, das geeignet ist, sich elastisch unter einem bestimmten Aufliegen zu verformen, **dadurch gekennzeichnet, dass** der starre Teil (2) ein Gehäuse im Wesentlichen mit der Form eines umgedrehten U bildet, das sich durch zwei seitliche Laschen (6) verlängert, dass das starre Gehäuse (2) auf seinem Ende das Gehäuse (3) aus biegsamem Material an einer Abschrägung (10) aufnimmt, die sich zum Inneren des Gehäuses (2) berichtet, und einen Absatz (11), der am Ende der Mündung der Abschrägung (10) liegt, wobei das Gehäuse (3) aus biegsamem Material auf dem starren Gehäuse (2) an seinem abgeschrägten Ende (12) zum Äußeren anschließt, indem es sich durch einen schrägen Abschnitt mit gleicher Schräge und einer vorstehenden Krempe (13) verlängert.

2. Verkleidungsteil (1) nach Anspruch 1, **dadurch gekennzeichnet, dass** der Teil (3) aus biegsamem Material ein Gehäuse ist, das eine allgemeine Form eines umgedrehten U, das sich in die Höhe in Richtung seines freien Endes (8) aufweitet, hat.

3. Verkleidungsteil (1) nach Anspruch 1, **dadurch gekennzeichnet, dass** die Abschrägung (10) des starren Gehäuses (2) und die Abschrägung (12) des biegsamen Gehäuses (3) zusammenwirken, wobei die vorstehende Krempe (13) des biegsamen Gehäuses (3) zum Aufliegen auf dem Absatz (11) des starren Gehäuses (2) kommt.

4. Verkleidungsteil (1) nach einem der vorhergehenden Ansprüche, **dadurch gekennzeichnet, dass** das biegsame Gehäuse (3) seine Stärke im Wesentlichen gleich der Hälfte der Stärke des starren Gehäuses (2) hat.

5. Verkleidungsteil (1) nach einem der vorhergehenden Ansprüche, **dadurch gekennzeichnet, dass** das starre Gehäuse (2) und das biegsame Gehäuse (3) bündig aneinander liegende äußere Oberflächen haben.

6. Verkleidungsteil (1) nach einem der vorhergehenden Ansprüche, **dadurch gekennzeichnet, dass** sich das biegsame Gehäuse (3) unter der Einwirkung eines Aufliegens auf seiner oberen Zone (17) verformt.

7. Kraftfahrzeug, das ein Verkleidungsteil (1) umfasst, das einen Teil (2) aus starrem Material und einen anderen Teil (3) aus biegsamem Material nach einem der Ansprüche 1 bis 6 umfasst.

## Claims

1. A trim element (1) intended to cover the mechanical part of an adjustable steering column of a motor vehicle, made up of two separate parts (2) (3), **characterized in that** one part (2) is made of a rigid material and the other part (3) of a flexible material, able to deform elastically under a determined load, **characterized in that** the rigid part (2) forms a casing substantially in the shape of an inverted U, extending by two lateral tabs (6), **in that** the rigid casing (2) on its end receiving the casing (3) of flexible material has a bevel (10) directed toward the interior of the casing (2) and a heel (11) situated close to the opening of the bevel (10), the casing (3) of flexible material being linked on the rigid casing (2), has its bevel end (12) toward the exterior extending by an inclined portion having an identical inclination and a projecting edge (13).

2. The trim element (1) according to Claim 1, **characterized in that** the part (3) made of flexible material is a casing having a general shape of an inverted U, flaring in height in the direction of its free end (8).

3. The trim element (1) according to Claim 1, **characterized in that** the bevel (10) of the rigid casing (2) and the bevel (12) of the flexible casing (3) come to cooperate together, the projecting edge (13) of the flexible casing (3) coming to rest on the heel (11) of the rigid casing (2).

4. The trim element (1) according to one of the preceding claims, **characterized in that** the flexible casing (3) has its thickness substantially equal to half the thickness of the rigid casing (2).

5. The trim element (1) according to one of the preceding claims, **characterized in that** the rigid casing (2) and the flexible casing (3) have their exterior surfaces flush.

6. The trim element (1) according to one of the preceding claims, **characterized in that** the flexible casing (3) deforms elastically under the effect of a bearing on its upper zone (17).

7. A motor vehicle comprising a trim element (1), comprising a part (2) of rigid material and another part (3) of flexible material according to any one of Claims 1 to 6.
